# EUROPÄISCHE PATENTSCHRIFT

(11) **EP 1 177 392 B1**
(45) Veröffentlichungstag und Bekanntmachung des Hinweises auf die Patenterteilung: **07.08.2002**
(21) Anmeldenummer: 00929468.7
(22) Anmeldetag: 29.04.2000
(51) Int. Cl.: F16H 61/00

(54) **VERFAHREN ZUR MANUELLEN VORGABE DER ÜBERSETZUNG EINES STUFENLOSEN GETRIEBES**
METHOD FOR MANUALLY STIPULATING THE TRANSMISSION RATIO OF A CONTINUOUSLY VARIABLE TRANSMISSION (CVT)
PROCEDE DE CONSIGNE MANUELLE DU RAPPORT DE DEMULTIPLICATION D'UNE TRANSMISSION CONTINUE VARIABLE

(30) Priorität: 08.05.1999 DE 19921500
(43) Veröffentlichungstag der Anmeldung: 06.02.2002
(73) Patentinhaber: ZF Batavia, L.L.C., Batavia, OH 45103 (US)
(72) Erfinder: SPEICHER, Patrick, D-88094 Oberteuringen (DE); VORNDRAN, Ralf, D-88097 Eriskirch (DE); WELTE, Anton, D-88048 Friedrichshafen (DE)
(74) Vertreter: Zietlow, Karl-Peter
(86) Internationale Anmeldenummer: EP0003899
(87) Internationale Veröffentlichungsnummer: WO0068602

(56) Entgegenhaltungen:
- EP-A- 0 697 548
- DE-A- 4 312 415
- DE-C- 4 120 540

## Beschreibung

Die Erfindung bezieht sich auf ein Verfahren zur manuellen Vorgabe der Übersetzung eines stufenlosen Getriebes (CVT) nach dem Oberbegriff des Patentanspruches 1.

Die Betriebsstrategie eines stufenlosen Getriebes (CVT) orientiert sich üblicherweise einerseits an einer guten Fahrbarkeit und andererseits an einem günstigen Kraftstoffverbrauch. Für die gute Fahrbarkeit wesentliche Kriterien sind eine gute Relation zwischen Motordrehzahl und Fahrgeschwindigkeit, Motordynamik und Fahrleistung entsprechend dem Fahrerwunsch, eine Anpassung an den Fahrzustand (z. B. Stadt, bergauf), sicheres Rückverstellen in die größte Übersetzung (LOW) beim Anhalten sowie manuelle Eingriffsmöglichkeiten durch den Fahrer. Für einen günstigen Kraftstoffverbrauch ist insbesondere eine hohe Aufenthaltsdauer im verbrauchsgünstigen Bereich des Motorkennfeldes sowie eine Absenkung der Motordrehzahl bei Konstantfahrt anzustreben. Da sich die genannten Kriterien für eine Betriebsstrategie eines stufenlosen Getriebes teilweise widersprechen, wird üblicherweise ein Kompromiß dargestellt.

Um die Vorteile einer kontinuierlichen Verstellung der Getriebeübersetzung mit dem bekannten Gangwechselverhalten und der damit verbundenen Motorakustik eines Stufenautomatgetriebes zu kombinieren, schlägt die US-PS 4,836,056 vor, die Betriebsstrategie des CVT von einer stufenlosen Übersetzungsverstellung automatisch, in Abhängigkeit von einem die Motorlast repräsentierenden Signal, umzuschalten auf eine dem Stufenautomat entsprechende Schaltkennliniensteuerung. Das erzielte Verstellverhalten des stufenlosen Getriebes ähnelt auf diese Weise einem Stufenautomaten mit sehr weichem Drehmomentwandler, bei dem eine Wandlerüberbrückungskupplung bis zu einer Drosselklappenschwele immer geöffnet ist. Das Drehzahlverhalten des Motors kann vom Fahrer als negativ empfunden werden ("Hosenträgereffekt", "Gummibandeffekt").

Um das Betriebsverhalten des stufenlosen Getriebes besser an Fahrerwünsche und Umgebungseinflüsse automatisiert anzupassen, sind adaptive Fahrstrategien bekanntgeworden.

Beispielsweise schlägt die DE-OS 43 12 415 vor, die Übersetzung anhand unterschiedlicher Kennlinien des Motorkennfeldes einzustellen. Hierbei erfolgt die Betriebspunktführung in einem Bereich zwischen einer Kennlinie optimalen Kraftstoffverbrauchs und einer Kennlinie optimaler Motorleistung. Die Betriebspunkte zwischen diesen Begrenzungslinien liegen auf sogenannten dynamischen Kennlinien, deren Lage von der Größe der Änderungsgeschwindigkeit der Leistungsanforderung abhängt. Die Auswahl des Schaltkennfeldes und der jeweiligen dynamischen Kennlinie, entlang welcher der Betriebspunkt geführt wird, erfolgt automatisch.

Die DE-PS 41 20 546 beschreibt eine Betriebsstrategie für ein CVT, bei dem die Steuerkennlinie, nach der die kontinunierliche Übersetzung in Abhängigkeit von Drosselklappe und Motordrehzahl selbsttätig eingestellt wird, abhängig vom Fahrstil bzw. der Fahraktivität des Fahrers aus einer Schar von mehreren in der Getriebesteuerung abgelegten Steuerkennlinien automatisch ausgewählt wird. Die Bewertung des Fahrerstils bzw. der Fahraktivität ist eine komplexe Funktion und der Applikationsaufwand entsprechend hoch.

Die DE-OS 196 00 915 der Anmelderin beschreibt ein Verfahren zur Betriebspunktführung in einer automatischen Betriebsart, bei dem die aktuelle Betriebspunktvorgabe in einem vorgegebenen Fahrbereich mit einer unteren und einer oberen Grenze unter Verarbeitung aktueller, im wesentlichen fahrabhängiger Eingangssignale ohne Filterung ständig neu bestimmt wird. Somit wird hier die Lage des Betriebspunktes im Getriebe-Variogramm ständig neu berechnet und vorwiegend von den Aktivitäten des Fahrers bestimmt.

Nachteilig bei allen Verfahren zur automatischen Betriebspunktführung ist, daß trotz hohem Applikationsaufwand nicht allen Fahrerwünschen entsprochen werden kann, insbesondere nicht dem Wunsch nach manueller Eingriffsmöglichkeit.

Hierzu schlägt die DE-PS 41 20 540 vor, neben einer ersten Betriebsart mit automatischer Fahrstrategie eine zweite Betriebsart zu schaffen, in welcher der Fahrer über einen manuellen Eingriff das Betriebsverhalten eines Stufengetriebes nachbilden kann. Hierzu wird eine Anzahl fest vorgegebener, konstanter Übersetzungen bzw. Gangsprünge, beispielsweise in einem Kennfeld, gespeichert. Gibt der Fahrer einen manuellen Schaltbefehl an das Getriebe, erfolgt die Auswahl der konstanten Getriebeübersetzungen aus dem Kennfeld in Abhängigkeit einer Fahraktivität. Beim Übergang von der ersten automatischen Betriebsart in die zweite manuelle Betriebsart durch eine vom Fahrer bediente Wähleinrichtung steuert eine Übergangsfunktion den Sprung der aktuellen Getriebeübersetzung, die im Moment des Betriebsartwechsels festgehalten wird, an die nächstliegende konstante Übersetzungsvorgabe. Um den Fahrerwunsch in der manuellen Betriebsart besser darzustellen, schlägt die DE-PS 41 20 540 weiterhin vor, die Gangsprünge aus Gruppen von vorgegebenen konstanten Übersetzungen auszuwählen, die verschiedene Schaltcharakteristiken abbilden, beispielsweise eine kraftstoffverbrauchsoptimierte Schongangcharakteristik und eine leistungsoptimierte Sportcharakteristik.

Nachteilig bei der Abbildung eines Stufengetriebes mit konstanten Übersetzungen als manuelle Betriebsstrategie für ein stufenloses Getriebe ist insbesondere die eingeschränkte Fahrbarkeit in den Eckpunkten des Betriebskennfeldes. So kann der Motor im unteren Geschwindigkeitsbereich durch einen zu niedrigen Gang abgewürgt werden, was für einen normalen Automatikfahrer ein überraschendes Fahrzeugverhalten darstellt. Auch kann die Anfahrleistung für den Fahrer überraschend niedrig sein, wenn er versehentlich vergessen hat, beim Anhalten alle Gangstufen herunterzuschalten. Aufgrund des üblichen Spreizungsvorteils des stufenlosen Getriebes im Anfahrbereich muß der Fahrer die Gänge im unteren Geschwindigkeitsbereich sehr schnell wechseln, um eine optimale Beschleunigung zu erzielen. Als Lösung schlägt die DE-PS 41 20 540 eine Zwangshochschaltung oder eine Zwangsrückschaltung in festen, voreingestellten Gangsprüngen vor, wenn entsprechende Schwellwerte erreicht werden.

Die EP 0 697 548 A1 beschreibt eine Fahrstrategie für ein stufenloses Automatgetriebe, bei der in einer zweiten Betriebsart diskrete, manuell vorwählbare Fahrstrahlen vorgesehen sind, die sich alle in einem virtuellen Nullpunkt schneiden. Dieser virtuelle Nullpunkt liegt außerhalb des Variogramms des CVT im negativen Fahrgeschwindigkeitsbereich und positiven Motordrehzahlbereich. Es ist dabei also unmöglich, in allen manuell vorwählbaren Fahrstrahlen die Anfahrübersetzung LOW und die maximale Fahrzeuggeschwindigkeit zu erreichen.

Der Erfindung liegt die Aufgabe zugrunde, ein Verfahren zur Vorgabe der Übersetzung eines stufenlosen Getriebes mit einer ersten automatischen Betriebsart und einer zweiten manuellen Betriebsart zu schaffen, bei dem das Betriebsverhalten in der manuellen Betriebsart, in welcher der Fahrer einen direkten Eingriff in die Wahl der Übersetzungen hat, verbessert wird.

Die der Erfindung zugrunde liegende Aufgabe wird dadurch gelöst, daß der Fahrer in der manuellen Betriebsart des stufenlosen Getriebes über eine Schalt- oder Wähleinrichtung stufenlose, fahrzeuggeschwindigkeitsabhängige Motordrehzahlverläufe manuell vorgeben kann.

Erfindungsgemäß wird vorgeschlagen, die manuell anwählbaren Morordrehzahlverläufe als beliebige Kurvenzüge innerhalb der konstruktiven Grenzen des Getriebe-Variogramms derart auszubilden, daß mit jedem Drehzahlverlauf sowohl die Anfahrübersetzung (LOW) als auch die Höchstgeschwindigkeit des Fahrzeugs erreicht werden kann.

Die Vorgaben der Motordrehzahlverläufe werden innerhalb der elektro-hydraulischen Steuerung des stufenlosen Getriebes steuerungs- und/oder regelungstechnisch verarbeitet und als Übersetzungsvorgaben an den Variator ausgegeben. Insofern können die erfindungsgemäßen, manuell auswählbaren Motordrehzahlverläufe auch als fahrzeuggeschwindigkeitsabhängige Variator-Eingangsdrehzahlverläufe oder Variator-Übersetzungsverläufe dargestellt werden. Die Übertragungsfunktion zwischen Motordrehzahl und Variator-Eingangsdrehzahl ist dann entsprechend zu berücksichtigen, bei einem Drehmomentwandler als Anfahrelement zwischen Motor und Variator beispielsweise als Wandlerkennlinie.

Der Erfindung zugrunde liegt einerseits das subjektive Empfinden des Fahrers in der Beurteilung des Zusammenhangs von Motordrehzahl und Fahrleistung, andererseits die technischen Voraussetzungen des stufenlosen Getriebes hinsichtlich des Übersetzungsverstellbereiches und der Möglichkeiten der Betriebspunktführung.

Neben den geschwindigkeitsabhängigen Fahrgeräuschen orientiert sich das akustische Empfinden der Fahrers an der Motordrehzahl. Dies gilt insbesondere für eine manuelle Betriebsart des Getriebes, bei welcher der Fahrer bewußt in die Betriebspunktführung des Motors eingreift. Hier bietet das erfindungsgemäße Verfahren Vorteile durch die direkte bewußte Vorgabe von Motordrehzahlverläufen.

Üblicherweise haben stufenlose Getriebe gegenüber Stufenautomaten einen Spreizungsvorteil. Die Gesamtspreizung ist in den Grenzen LOW (größte Übersetzung) und OD (Overdrive, kleinste Übersetzung) konstruktiv vorgegeben. Überlicherweise ist die Anfahrübersetzung LOW eines stufenlosen Getriebes geringer als die Übersetzung des ersten Ganges eines Stufenautomaten.

Dies hat zur Folge, daß der Motor bei einer Vollastanfahrt und Getriebeübersetzung LOW entsprechend schneller auf die Maximaldrehzahl hochläuft. Würde in der manuellen Betriebsart des CVT die Getriebeübersetzung als ein fester Gang konstant beibehalten, wie beispielsweise in der DE-PS 41 20 540 beschrieben, müßte der Fahrer jetzt manuell sehr schnell schalten, um optimalen Anschluß an den nächsten Gang zu finden. Da bei der erfindungsgemäßen Lösung der Fahrer stufenlose Motordrehzahlverläufe manuell vorgibt, wird das stufenlose Getriebe in vorteilhafter Weise die Übersetzung anhand des voreingestellten Drehzahlverlaufs wie eine kontinuierliche Zwangshochschaltung nachführen. Entsprechend reagiert das Fahrzeug ohne einen Leistungseinbruch unverändert mit optimalem Geschwindigkeitszuwachs, ohne daß der Fahrer erneut manuell eingreifen muß.

Bedingt durch die große Gesamtspreizung ist die längste Übersetzung (Overdrive, OD) eines stufenlosen Getriebes üblicherweise größer als der größte Gang eines Stufenautomaten. In der manuellen Betriebsart des CVT ist es möglich, in der Overdrive-Übersetzung sehr niedrige Geschwindigkeiten und damit sehr niedrige Motordrehzahlen zu fahren. Kritisch ist hier das Anhalten des Fahrzeugs aus einem solchen Betriebspunkt heraus, insbesondere in Verbindung mit einer starken Abbremsung. Um beim anschließenden Anfahren ausreichende Fahrleistungen erzielen zu können, muß das Getriebe, unverändert in der manuellen Betriebsart, in Richtung Anfahrübersetzung verstellt werden. Würde in der manuellen Betriebsart des CVT die Getriebeübersetzung in festen Gangstufen konstant vorgegeben, müßte der Fahrer in der verbleibenden Zeit bis zum Stillstand sämtliche Gänge einzeln herunterschalten, um wieder in LOW anfahren zu können.

Erschwert wird die Situation des Anhaltens in der manuellen Betriebsart aus OD heraus für den Fahrer durch eine Gewöhnung an den Anhaltekomfort in der ersten Betriebsart mit stufenloser, automatischer Übersetzungsverstellung.

Die erfindungsgemäße manuelle Vorgabe von Motordrehzahlverläufen durch den Fahrer löst das Problem auf einfache und elegante Weise. Bedingt durch die beliebige Gestaltung der manuell auswählbaren Drehzahlverläufe kann die Übersetzung, insbesondere in Abhängigkeit der Fahrzeuggeschwindigkeit, stufenlos als eine kontinuierliche Zwangsrückschaltung von der OD-Übersetzung in die LOW-Übersetzung überführt werden, ohne daß der Fahrer manuell eingreifen muß.

Das erfindungsgemäße Verfahren verbindet die Vorteile einer manuellen Eingriffsmöglichkeit in die Betriebspunktführung der Motor-Getriebe-Einheit durch den Fahrer mit dem Komfort und der Sicherheit einer stufenlosen Drehzahlführung des Motors durch das CVT.

Weitere wesentliche, erfindungsgemäße Vorteile ergeben sich durch die Integration in die Übersetzungs- oder Drehzahlregelung des stufenlosen Getriebes. Die Übergänge zwischen den einzelnen manuell auswählbaren Drehzahlverläufen sind frei gestaltbar. "Weiche", bedarfsgerechte Übergänge führen zu einer spürbaren Entlastung der Drehzahl- oder Übersetzungsregelung des Variators und verbessern den Fahrkomfort ebenso wie die kontinuierlichen Zwangshochschaltungen in Richtung Höchstgeschwindigkeit und die kontinuierliche Zwangsrückschaltung in Richtung Fahrzeugstillstand. Der Applikationsaufwand ist vergleichsweise gering. Darüber hinaus lassen sich Sonderfunktionen, die in der ersten automatischen Betriebsart des CVT vorhanden sind, auf einfache Weise in die zweite manuelle Betriebsart integrieren.

In einer Weiterbildung der Erfindung wird vorgeschlagen, ein zwischen dem Antriebsmotor und dem Variator angeordnetes Anfahrelement in die manuelle Betriebsstrategie zu integrieren. Auf diese Weise kann der durch die mechanischen Eckübersetzungen LOW und OD des Variators begrenzte manuelle Betriebsbereich erweitert werden, solange das Anfahrelement nicht vollständig geschlossen ist. Im Falle eines hydrodynamischen Drehmomentwandlers mit integrierter Wandlerüberbrückungskupplung (WK) ist der zusätzliche hydraulische Verstellbereich bei offener WK durch die Wandlerkennung definiert. Im Falle einer Kupplung ist die untere Grenze des Verstellbereichs durch eine Kupplungsschlupfkennung definiert, solange die Kupplung nicht vollständig geschlosen ist.

In einer anderen Weiterbildung der Erfindung wird vorgeschlagen, daß die manuelle Betriebsart des stufenlosen Getriebes aufgrund übergeordneter Eingangssignale sofort verlassen und in die automatische Betriebsart gewechselt wird, und daß nach Erlöschen der übergeordneten Eingangssignale sofort wieder in die manuelle Betriebsart zurückgewechselt wird. Diese Wechsel laufen für den Fahrer nicht spürbar ab. Übergeordnete Eingangssignale sind beispielsweise ein Kick-down-Schaltbefehl (KD) des Fahrers oder eine Mitteilung des Antiblockiersystems "ABS aktiv". Somit können wichtige Sonderfunktionen, die in der automatischen Betriebsart des CVT wirksam sind, auf einfache Weise in der manuellen Betriebsart mitgenutzt werden.

In der zweiten, manuellen Betriebsart des stufenlosen Getriebes wählt der Fahrer über einen Schaltbefehl voreingestellte, fahrzeuggeschwindigkeitsabhängige Motordrehzahlverläufe zur Übersetzungsverstelllung des Getriebes aus. Bei einem Schaltbefehl zum Wechseln der Drehzahlverläufe wird der aktuelle Drehzahlverlauf mittels einer Steuerfunktion in den neuen Drehzahlverlauf überführt, ausgehend vom aktuellen Betriebspunkt, wobei die Überführungsfunktion in beliebiger Kurvenform ausgebildet sein kann.

In einer Ausgestaltung wird erfindungsgemäß vorgeschlagen, die Übergangsfunktion derart auszubilden, daß der Motordrehzahlübergang bzw. der Variator-Eingangdrehzahlübergang bzw. der Übersetzungsübergang als Funktion der Lage des aktuellen Betriebspunktes relativ zum Zieldrehzahlverlauf oder relativ zum Startdrehzahlverlauf berechnet wird. Insbesondere wird vorgeschlagen, den Motordrehzahlgradient beim Übergang zwischen zwei Motordrehzahlverläufen über das Verhältnis Differenz von aktueller Motordrehzahl und fahrzeuggeschwindigkeits-korrespondierender Drehzahl des Zieldrehzahlverlaufs zur fahrzeuggeschwindigkeits-korrespondierenden Differenzdrehzahl zwischen Startdrehzahlverlauf und Zieldrehzahlverlauf zu steuern und/oder zu regeln.

In vorteilhafter Weise verbessern "runde" Drehzahlübergänge den Schaltkomfort. Es können für gleichartige Übergänge, beispielsweise ein Wechsel zu einem höheren Drehzahlniveau ("Rückschaltungen") sowohl formgleiche Motordrehzahlübergänge als auch formgleiche Übersetzungsübergänge dargestellt werden. Darüber hinaus entlasten "runde" Drehzahlübergänge die erforderlichen Sicherheitsfunktionen der Variatorverstellung gegen ungewollten Variatorschlupf.

Bei einem Wechsel der automatischen Betriebsart des stufenlosen Getriebes in eine manuelle Betriebsart durch den Fahrer über eine Schalt- oder Wähleinrichtung schlägt die DE-PS 41 20 540 vor, die aktuelle Getriebeübersetzung zunächst beizubehalten. Erst bei einem weiteren Schaltbefehl des Fahrers wird auf die nächstliegende konstante Übersetzung gesprungen. Die Höhe des ersten Gangsprunges kann im ungünstigsten Fall einen halben bzw. einen eineinhalbfachen, regulären Gangsprung betragen.

Demgegenüber wird erfindungsgemäß vorgeschlagen, bei einem Wechsel von der automatischen in die manuelle Betriebsart die drehzahl- bzw. übersetzungsgemäße Lage der aktuellen Betriebspunkte zunächst relativ zu den oberhalb und unterhalb nächstliegenden, voreingestellten Motordrehzahl- oder Variator-Eingangsdrehzahl- oder Übersetzungsverläufen beizubehalten. In vorteilhafter Weise ergibt sich durch die Nachführung der Drehzahl bzw. der Übersetzung relativ zu den nicht äquidistanten Verläufen ein harmonisches Fahrverhalten schon ab dem Betriebsartwechsel. Mit dem nächsten manuellen Schaltbefehl wird der nachgeführte Betriebspunkt auf die nächstliegenden Drehzahl- bzw. Übersetzungsverläufe überführt.

In einer anderen Ausgestaltung des Betriebsartwechsels wird erfindungsgemäß vorgeschlagen, die aktuelle Übersetzung oder die aktuelle Motordrehzahl oder die aktuelle Variator-Eingangsdrehzahl zunächst beizubehalten. Trifft der solchermaßen nur geschwindigkeitsmäßig nachgeführte Betriebspunkt auf den nächstliegenden voreingestellten Drehzahl- oder Übersetzungsverlauf, wird fortan der Betriebspunkt bis zum nächsten manuellen Schaltbefehl auf dieser Kennlinie nachgeführt. In vorteilhafter Weise wird der Betriebspunkt somit automatisch auf die manuell anwählbare Drehzahlcharakteristik bzw. Verstellcharakteristik überführt.

In einer weiteren Ausgestaltung des Betriebsartwechsels wird vorgeschlagen, direkt beim Wechsel von der automatischen in die manuelle Betriebsart auf den nächsthöherliegenden Motordrehzahlverlauf zu wechseln. In vorteilhafter Weise berücksichtigt diese Betriebsartwechselstrategie, daß der Fahrer die automatische Betriebsart zielgerichtet verläßt, um unmittelbar eine höhere Motorleistung oder aber eine höhere Motorbremswirkung manuell vorzugeben.

In einer weiteren Ausgestaltung des Betriebsartwechsels wird vorgeschlagen, direkt beim Wechsel von der automatischen in die manuelle Betriebsart auf den nächstunteren Motordrehzahlverlauf zu wechseln.

Die Erfindung wird nachfolgend anhand der in den Zeichnungen dargestellten Ausführungsbeispiele erläutert.
Es zeigen:
- Fig. 1: ein Variogramm eines stufenlosen Getriebes;
- Fig. 2: ein Variogramm eines stufenlosen Getriebes für eine zweite manuelle Betriebsart gemäß der Erfindung;
- Fig. 3: ein Variogramm für ein zweites Beispiel einer erfindungsgemäßen, manuellen Betriebsart;
- Fig. 4: ein Variogramm für ein erfindungsgemäßes Beispiel einer Übergangsfunktion zwischen zwei Motordrehzahlverläufen und
- Fig. 5: eine XY-Darstellung der Übergangsfunktion nach Fig. 4.

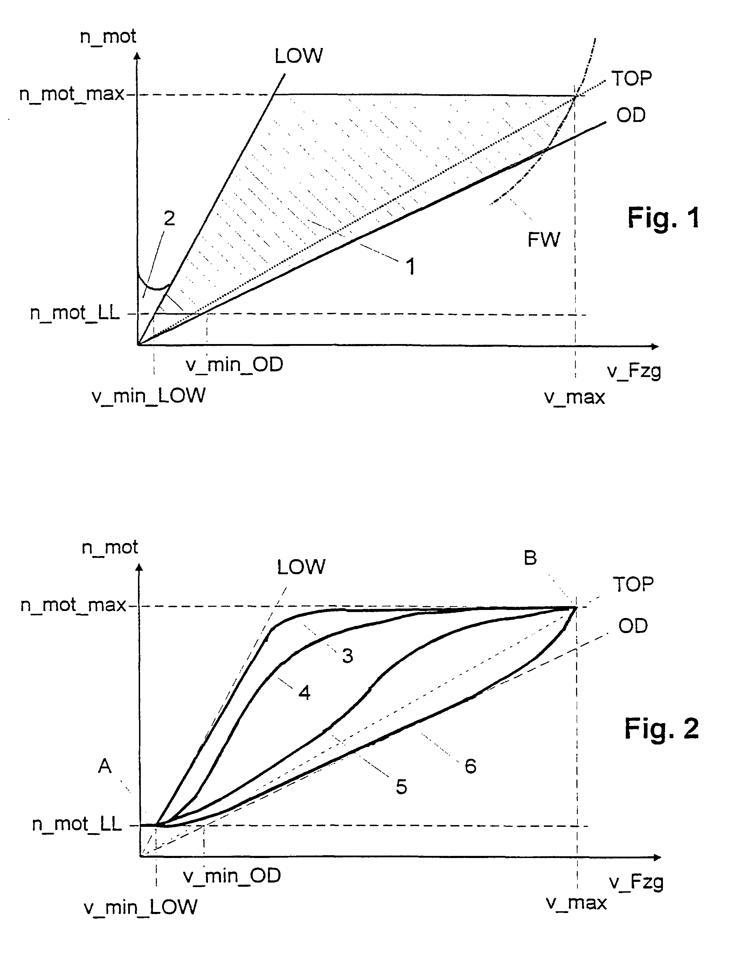

Fig. 1 zeigt ein Variogramm eines stufenlosen Getriebes als Funktion von Fahrzeuggeschwindigkeit v_Fzg und Drehzahl des Antriebsmotors n_mot. Die konstruktiv bedingten, mechanischen Grenzen des Getriebes sind als Fahrstrahlen LOW (größtmögliche mechanische Übersetzung) und OD (kleinstmögliche mechanische Übersetzung) in durchgezogener Linie eingezeichnet. Fahrzeugseitig wird der Betriebsbereich begrenzt durch den Fahrwiderstand FW, der als strichpunktierte Linie eingezeichnet ist. Die sich ergebende Fahrzeughöchstgeschwindigkeit v_max ist als gestrichelte Begrenzungslinie dargestellt. Die Getriebeübersetzung, die sich bei Höchstgeschwindigkeit einstellt, ist mit TOP bezeichnet und als Fahrstrahl punktiert eingezeichnet. Motorseitig wird der Betriebsbereich begrenzt durch die gestrichelt dargestellten Linien für eine maximal zulässige Motordrehzahl n_mot_max und eine minimal zulässige Motordrehzahl, die wie bei üblichen Brennkraftmaschinen mit Leerlaufdrehzahl n_mot_LL bezeichnet ist. Der innerhalb dieser Grenzen fahrbare Betriebsbereich der Motor-Getriebe-Einheit ist mit "1" bezeichnet und schraffiert dargestellt.

Die gewählte Darstellung des Variogramms verdeutlicht die Randbedingungen für die Auslegung der zweiten manuellen Betriebsart. Die Fahrzeuggeschwindigkeit kann auch durch andere geschwindigkeitsäquivalente Größen dargestellt werden, beispielsweise als Getriebeabtriebsdrehzahl. Die Aufspannung des Variogramms über der Motordrehzahl ist zweckmäßig, wenn in der zweiten Betriebsart Motordrehzahlverläufe manuell auswählbar sind, wie als bevorzugte Ausführungsform der Erfindung vorgeschlagen. Für die erfindungsgemäße Vorgabe von Variator-Eingangsdrehzahlverläufen wäre eine Darstellung des Variogramms über einem geschwindigkeitsäquivalenten Signal und der Variator-Eingangsdrehzahl zweckmäßig.

Da eine Brennkraftmaschine nicht unterhalb ihrer Leerlaufdrehzahl n_mot_LL betrieben werden kann, ergibt sich bei Einstellung der größtmöglichen mechanischen Getriebeübersetzung LOW eine kleinste realisierbare Fahrzeuggeschwindigkeit v_min_LOW. Unterhalb v_min_LOW würde die Brennkraftmaschine drehzahlmäßig gedrückt und schließlich abgewürgt, wenn die mechanische Verbindung zwischen Antriebsmotor und Variator nicht geöffnet wird. Bei Verwendung eines Drehmomentwandlers mit Wandlerüberbrückungskupplung als Anfahreinrichtung wird in diesem Fall die Wandlerüberbrückungskupplung geöffnet. Die sich daraus ergebende Erweiterung des Betriebsbereichs durch die hydraulische Wandlerübersetzung ist in Fig. 1 mit 2 bezeichnet und grau unterlegt.

Aufgrund der Abwürgeproblematik der antreibenden Brennkraftmaschine ist bei eingestellter, kleinstmöglicher Getriebeübersetzung OD nur ein Fahrbetrieb oberhalb v_min_OD möglich. Unterhalb dieser Grenzgeschwindigkeit muß bei unveränderter Übersetzungseinstellung die Anfahrkupplung bzw. die Wandlerüberbrückungskupplung geöffnet oder aber eine Zwangsrückschaltung eingeleitet werden.

In Fig. 2 ist eine erfindungsgemäße manuelle Betriebsart eines stufenlosen Getriebes im Variogramm dargestellt, wobei der Fahrer verschiedene Motordrehzahlverläufe 3, 4, 5, 6 mittels einer Schalt- oder Wähleinrichtung direkt vorgeben kann. Die Darstellung des Variogramms entspricht der Darstellung in Fig. 1. Entsprechend sind auch gleichermaßen die prinzipiellen Grenzen des Motor-Getriebe-Betriebsbereichs n_mot_LL, n_MOT_max, v_max, LOW oder OD bezeichnet, ebenso die Getriebeübersetzung TOP bei Höchstgeschwindigkeit und die minimal mögliche Fahrzeuggeschwindigkeit v_min_LOW in der größten Getriebeübersetzung LOW bei nicht geöffnetem Anfahrelement. Mit 3, 4, 5 und 6 sind durchgezogene Linien einzelner Motordrehzahlverläufe bezeichnet, die oberhalb der Grenzgeschwindigkeit v_min_LOW innerhalb der mechanischen Getriebegrenzen LOW und OD verlaufen. Im Fahrgeschwindigkeitsbereich unterhalb der Grenzgeschwindigkeit v_min_LOW ist das Anfahrelement geöffnet und die Getriebeübersetzung LOW des Betriebspunktes A beibehalten.

Wesentliches Merkmal aller Motordrehzahlverläufe ist, daß sie beliebig ausgebildete Kurvenzüge innerhalb der Übersetzungsgrenzen LOW und OD sind und daß in jedem Drehzahlverlauf sowohl Fahrzeugstillstand als auch Höchstgeschwindigkeit v_max erreicht werden kann.

Hierbei kann auch vorgesehen sein, die Anfahrübersetzung bei Fahrzeugstillstand auf eine längere Übersetzung als die mechanisch kürzestmögliche LOW-Übersetzung vorzugeben, beispielsweise für einen Winterbetrieb.

Die Anzahl der Motordrehzahlverläufe ist prinzipiell beliebig, wird aber vorzugsweise im Bereich zwischen sechs und acht liegen. Neben einer sinnvollen Abbildung der Getriebespreizung in Motordrehzahlen sind hier auch weitere Aspekte, wie Motorkennung, Fahrzeugklasse und Philosophie des Fahrzeugherstellers, zu betrachten.

In Fig. 2 sind beispielhaft vier Motordrehzahlverläufe gezeigt, die der Fahrer manuell über eine Schalt- oder Wähleinrichtung, beispielsweise über einen Tip-Schalter im Lenkrad, anwählen kann. Das Getriebe wird die aktuelle Drehzahlvorgabe entsprechend dem geschwindigkeitsabhängigen, kontinuierlichen Verlauf als Variatorübersetzung umsetzen. Die Motordrehzahl ändert sich also mit der Fahrzeuggeschwindigkeit entsprechend dem vom Fahrer angewählten Drehzahlverlauf.

Der Kurvenzug 3 orientiert sich an einer maximal möglichen Fahrleistung. Das Fahrzeug wird bis kurz vor Erreichen der maximalen Motordrehzahl in der kürzestmöglichen Übersetzung gehalten. Wesentliches Merkmal ist der "runde" Übergang von der LOW-Übersetzung in Richtung TOP. In vorteilhafter Weise wird das Fahrzeug auch nach Erreichen der maximalen Motordrehzahl ohne Leistungseinbruch weiterbeschleunigt, entsprechend der vom Fahrer bewußt angewählten Drehzahlcharakteristik "maximale Fahrleistung", ohne daß ein weiterer, manueller Fahrereingriff erforderlich ist. Weiterhin wird in vorteilhafter Weise die Drehzahl- oder Übersetzungsregelung des Variators wirkungsvoll entlastet und der Fahrkomfort deutlich erhöht.

Der Kurvenzug 6 bildet eine Schongangcharakteristik ab. Die Motordrehzahl wird in diesem manuell angewählten Drehzahlverlauf möglichst entlang der längstmöglichen Übersetzung geführt. Wesentlich sind hier zwei Dinge: Zum einen wird durch die kontinuierliche Übersetzungsverstellung im oberen Geschwindigkeitsbereich die Fahrzeughöchstgeschwindigkeit (Betriebspunkt B) erreicht, ohne daß der Fahrer die bewußt angewählte Schongangcharakteristik manuell korrigieren muß. Zum anderen garantiert die kontinuierliche Zwangsrückerstellung im unteren Geschwindigkeitsbereich ein sicheres Zurückkommen in die Anfahrübersetzung beim Anhalten. Insbesondere bei einer stärkeren Abbremsung wird der Fahrer in vorteilhafter Weise von einer schnellen Schaltfolge entlastet, ohne auf eine direkte Übersetzungsbeeinflussung verzichten zu müssen. Neben einer Erhöhung der Fahrsicherheit, insbesondere durch die optimale Getriebeübersetzung beim Anfahren, wirkt sich die kontinuierliche Zwangsrückverstellung positiv auf den Fahrkomfort aus.

Die Kurvenzüge 4 und 5 zeigen beispielhafte Motordrehzahlverläufe zwischen den beiden extremen Auslegungen der Kurvenzüge 3 und 6. Die Ausgestaltung der Drehzahlverläufe ergibt sich beispielsweise aus Besonderheiten des Motorbetriebskennfeldes in bezug auf den Drehmomentenverlauf.

In einer Ausgestaltung zum Verfahren nach Fig. 2 wird erfindungsgemäß vorgeschlagen, das Anfahrelement in die manuelle Betriebsstrategie zu integrieren.

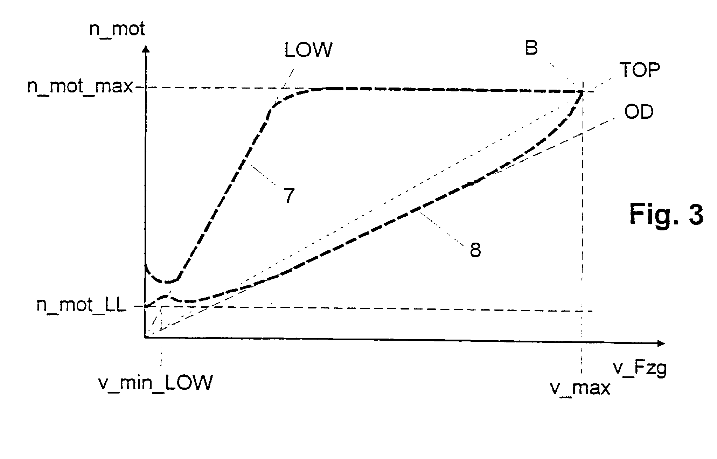

In Fig. 3 ist hierzu ein Variogramm, ähnlich dem in Fig. 2, dargestellt. Die Kurvenzüge 7 und 8 zeigen in gestrichter Linie beispielhaft manuell anwählbare Drehzahlverläufe, bei denen ein hydrodynamischer Wandler als Anfahrelement den für einen manuellen Eingriff nutzbaren Motordrehzahlbereich im unteren Geschwindigkeitsbereich durch einen zusätzlichen hydraulischen Verstellbereich erweitert. In vorteilhafter Weise kann somit eine Erhöhung des Anfahrmoments des Fahrzeugs realisiert werden.

Eine Ausbildung des erfindungsgemäßen Verfahrens ist somit die Vorgabe eines Motordrehzahlverlaufs oder eines Variator-Eingangsdrehzahlverlaufs oder eines Übersetzungsverlaufs, mit der durch eine Erhöhung des Anfahrmoments die Steigfähigkeit des Fahrzeugs bei einem manuellen Eingriff des Fahrers verbessert wird.

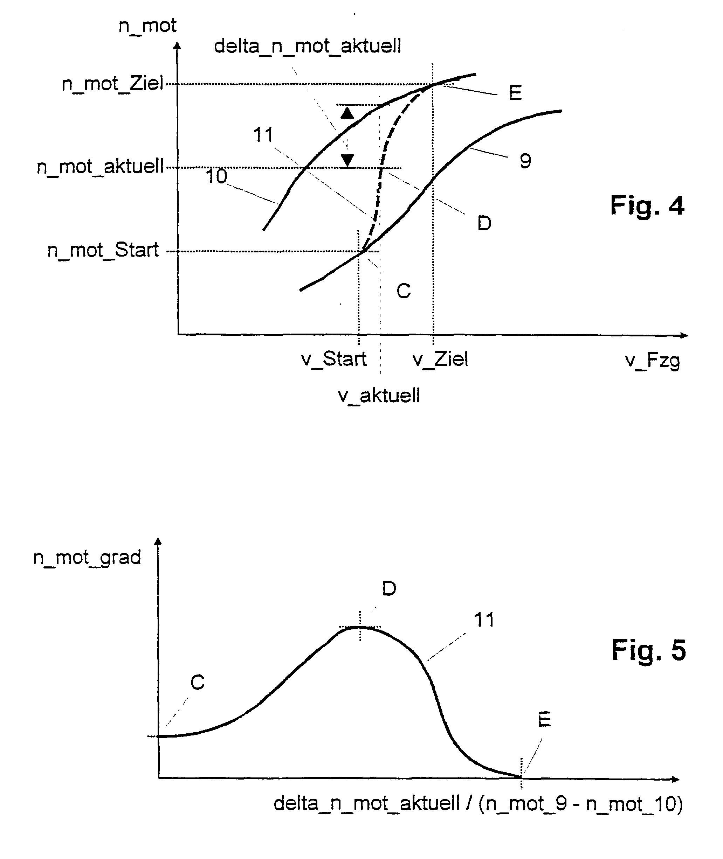

Fig. 4 zeigt ein bevorzugtes Beispiel einer erfindungsgemäßen Übergangsfunktion zwischen zwei manuell angewählten Motordrehzahlverläufen im Variogramm. Mit 9 ist ein erster, manuell angewählter Drehzahlverlauf bezeichnet. Im Startbetriebspunkt C, der durch die Werte n_mot_Start und v_Start definiert ist, löst der Fahrer einen Schaltbefehl zum Zieldrehzahlverlauf 10 aus, in diesem Beispiel also einen Rückschaltbefehl zu höheren Motordrehzahlen hin. Die Führung des Drehzahlübergangs vom Startbetriebspunkt C in den Zielbetriebspunkt E, definiert durch n_mot_Ziel und v_Ziel, orientiert sich hierbei in jedem dazwischenliegenden Betriebspunkt an der Differenz delta_n_mot_aktuell zwischen der aktuellen Motordrehzahl n_mot_aktuell und der der aktuellen Fahrzeuggeschwindigkeit v_aktuell entsprechenden Motordrehzahl auf dem Zieldrehzahlverlauf 10. Mit D ist beispielhaft ein zwischen Start- und Zielbetriebspunkt liegender aktueller Betriebspunkt gekennzeichnet, in dem der Überführungsdrehzahlgradient einen Wendepunkt hat. Einerseits aus Komfortgründen und andererseits zur Entlastung der Variatorregelung ist es zweckmäßig, den Drehzahlübergang von Startbetriebspunkt C aus mit relativ flachem Drehzahlgradient zu beginnen. Gleichermaßen ist es zweckmäßig, die Übergangsfunktion in den Zieldrehzahlverlauf S im Zielbetriebspunkt E "weich" einmüden zu lassen.

Fig. 5 zeigt den in Fig. 4 dargestellten, bevorzugten Drehzahlübergang 11 als XY-Funktionsdiagramm. Auf der X-Achse aufgetragen ist das Verhältnis von delta_n_mot_aktuell zur Differenz n_mot_9 - n_mot_10. Hierbei ist delta_n_mot_aktuell die Differenz zwischen der aktuellen Motordrehzahl n_mot_aktuell und der zur aktuellen Fahrzeuggeschwindigkeit korrespondierenden Drehzahl auf dem Zieldrehzahlverlauf 10 in jedem Betriebspunkt der Übergangsfunktion 11. Die Drehzahl n_mot_9 ist die Drehzahl auf dem ersten Drehzahlverlauf 9, die zur aktuellen Fahrzeuggeschwindigkeit korrespondiert. Die Drehzahl n_mot_10 ist die Drehzahl auf dem zweiten Zieldrehzahlverlauf 10, die ebenfalls zur aktuellen Fahrzeuggeschwindigkeit korrespondiert. Auf der Y-Achse aufgetragen ist der Motordrehzahlgradient n_mot_grad. Die Betriebspunkte C, D und E entsprechen denen aus Fig. 4.

Durch diese ständige Aktualisierung kann in vorteilhafter Weise auf fahrsituationsbedingte Änderungen während des manuellen Eingriffs reagiert werden, beispielsweise auf Gaspedalbewegungen oder eine zwischenzeitlich eingeleitete Bremsung durch den Fahrer. Diese Ausgestaltung erweist sich insbesondere dann vorteilhaft, wenn während eines manuellen Eingriffs eine der Betriebskennfeldgrenzen LOW, OD erreicht wird.

Als eine andere Ausgestaltung der Übergangsfunktion zwischen zwei Motordrehzahlverläufen wird erfindungsgemäß vorgeschlagen, die Übergangsfunktion auf eine einstellbare Zeit zu normieren. In vorteilhafter Weise können hierdurch gezielte Zeiten beim Wechsel der Drehzahlverläufe eingestellt werden.

In einer weiteren erfindungsgemäßen Ausgestaltung wird vorgeschlagen, die Übergangsfunktion zwischen zwei Motordrehzahlverläufen derart auszubilden, daß der Drehzahlgradient oder der Übersetzungsgradient während des Übergangs auf eine vorgebbare Größe begrenzt wird. In vorteilhafter Weise kann somit der Komfort verbessert werden, beispielsweise durch die Vermeidung eines Beschleunigungseinbruchs während eines Wechsel zu einem Verlauf mit höheren Drehzahlen ("Rückschaltung"). Entsprechend kann auch eine Beschleunigungszunahme bei einem Wechsel zu einem Verlauf mit niedrigeren Drehzahlen ("Hochschaltung") wirkungsvoll verhindert werden.

### Bezugszeichen

- 1: Betriebsbereich einer Motor-CVT-Einheit
- 2: Betriebsbereichserweiterung
- 3, 4, 5, 6, 7, 8: voreingestellte Motordrehzahlverläufe
- 9: Start-Motordrehzahlverlauf bei einem manuellen Schaltbefehl
- 10: Ziel-Motordrehzahlverlauf bei einem manuellen Schaltbefehl
- 11: Übergangsfunktion

- A: unterer Betriebspunkt auf LOW-Fahrstrahl
- B: Betriebspunkt für Höchstgeschwindigkeit
- C: Startpunkt eines Drehzahlverlaufswechsels
- D: Betriebspunkt während eines Drehzahlverlaufwechsels
- E: Zielpunkt eines Drehzahlverlaufwechsels

## Patentansprüche

1. Verfahren zur manuellen Vorgabe der Übersetzung eines mit einer Steuereinrichtung, einer Wähleinrichtung, einer Anfahreinrichtung und einem Variator zur Übersetzungsverstellung versehenen, stufenlosen Getriebes eines insbesondere von einer Brennkraftmaschine angetriebenen Kraftfahrzeugs, wobei die Steuereinrichtung in einer ersten automatischen Betriebsart die Getriebeübersetzung in Abhängigkeit von aus einem Fahrer-Fahrzeugsystem abgeleiteten Eingangssignalen selbsttätig wählt und einstellt und in einer zweiten manuellen Betriebsart der Fahrer über die Wähleinrichtung direkt in die Wahl der Getriebeübersetzung eingreifen kann, wobei in der zweiten Betriebsart voreingestellte, stufenlose, fahrzeuggeschwindigkeitsabhängige Motordrehzahlverläufe (3, 4, 5, 6, 7, 8) oder voreingestellte, stufenlose, fahrzeuggeschwindigkeitsabhängige Übersetzungsverläufe oder voreingestellte, stufenlose, fahrzeuggeschwindigkeitsabhängige Variator-Eingangsdrehzahlverläufe manuell anwählbar sind, **dadurch gekennzeichnet, daß** die Motordrehzahlverläufe oder die Übersetzungsverläufe oder die Variator-Eingangsdrehzahlverläufe als Kurvenzüge zwischen einer unteren Grenze (LOW) des Getriebeverstellbereichs und einer oberen Grenze (OD) des Getriebeverstellbereichs derart ausgebildet sind, daß in jedem Verlauf Fahrzeugstillstand und Fahrzeughöchstgeschwindigkeit erreicht werden kann.

2. Verfahren nach Anspruch 1, wobei die Anfahrvorrichtung des Getriebes als Drehmomentwandler ausgebildet ist, **dadurch gekennzeichnet, daß** der für einen manuellen Eingriff nutzbare Motordrehzahlbereich durch die hydraulische Wandlerkennung erweitert ist.

3. Verfahren nach Anspruch 1 oder 2, wobei die Anfahrvorrichtung als Kupplung ausgebildet ist, **dadurch gekennzeichnet, daß** der für einen manuellen Eingriff nutzbare Motordrehzahlbereich durch eine Kupplungsschlupfkennlinie erweitert ist.

4. Verfahren nach einem der Ansprüche 1 bis 3, **dadurch gekennzeichnet, daß** die zweite manuelle Betriebsart beim Vorliegen von übergeordneten Eingangssignalen unverzüglich verlassen und in die erste, automatische Betriebsart gewechselt wird und daß beim Erlöschen der übergeordneten Eingangssignale unverzüglich in die zweite manuelle Betriebsart zurückgewechselt wird.

5. Verfahren nach einem der Ansprüche 1 bis 4, **dadurch gekennzeichnet, daß** der Übergang zwischen verschiedenen Motordrehzahlverläufen oder Variator-Eingangsdrehzahlverläufen oder Übersetzungsverläufen durch eine Übergangsfunktion (11) gesteuert und/oder geregelt wird, die in beliebiger mathematischer Kurvenform ausgebildet ist.

6. Verfahren nach einem der Ansprüche 1 bis 5, insbesondere nach Anspruch 5, **dadurch gekennzeichnet, daß** beim Übergang zwischen verschiedenen Motordrehzahlverläufen (9, 10) oder Variator-Eingangsdrehzahlverläufen oder Übersetzungsverläufen der Motordrehzahlgradient (n_mot_grad) oder der Variator-Eingangsdrehzahlgradient oder der Übersetzungsgradient von einer Übergangsfunktion (11) als Funktion der Lage des aktuellen Betriebspunktes (D) relativ zum Zielbetriebspunkt (E) gesteuert und/oder geregelt wird.

7. Verfahren nach einem der Ansprüche 1 bis 6, insbesondere nach Anspruch 5 und 6, **dadurch gekennzeichnet, daß** der Zielbetriebspunkt (E) der Übergangsfunktion (11) während des Übergangs ständig neu berechnet wird.

8. Verfahren nach einem der Ansprüche 1 bis 7, **dadurch gekennzeichnet, daß** der Motordrehzahlgradient (n_mot_grad) beim Übergang von einem ersten Motordrehzahlverlauf (9) zu einem zweiten Motordrehzahlverlauf (10) als Funktion des Verhältnisses der Differenz (delta_n_mot_aktuell) von aktueller Motordrehzahl (n_mot_aktuell) und fahrzeuggeschwindigkeits-korrespondierender Drehzahl des zweiten Motordrehzahlverlaufs (10) zur Differenzdrehzahl zwischen der fahrzeuggeschwindigkeits-korrespondierenden Drehzahl (n_mot_9) auf dem ersten Drehzahlverlauf (9) und der fahrzeuggeschwindigkeits-korrespondierenden Drehzahl (n_mot_10) auf dem Zieldrehzahlverlauf (10) gesteuert und/oder geregelt wird oder daß der Drehzahlgradient beim Übergang zwischen verschiedenen Variator-Eingangsdrehzahlverläufen als Funktion des Verhältnisses der Differenz von aktueller Variator-Eingangsdrehzahl und fahrzeuggeschwindigkeits-korrespondierender Drehzahl des Zieldrehzahlverlaufs zur Differenzdrehzahl zwischen der fahrzeuggeschwindigkeits-korrespondierenden Drehzahl der ersten Variator-Eingangsdrehzahlverlaufs und der fahrzeuggeschwindigkeits-korrespondierenden Variator-Eingangsdrehzahl des Zieldrehzahlverlaufs gesteuert und/oder geregelt wird
oder daß der Verstellgradient beim Übergang zwischen verschiedenen Übersetzungsverläufen als Funktion des Verhältnisses der Differenz von aktueller Übersetzung und fahrzeuggeschwindigkeits-korrespondierender Übersetzung des Zielübersetzungsverlaufs zur fahrzeuggeschwindigkeits-korrespondierenden Übersetzungsdifferenz zwischen Startund Zielübersetzungsverlauf gesteuert und/oder geregelt wird.

9. Verfahren nach einem der Ansprüche 1 bis 5, **dadurch gekennzeichnet, daß** beim Übergang zwischen verschiedenen Motordrehzahlverläufen (9, 10) oder Variator-Eingangsdrehzahlverläufen oder Übersetzungsverläufen der Motordrehzahlgradient (n_mot_grad) oder der Variator-Eingangsdrehzahlgradient oder der Übersetzungsgradient von einer Übergangsfunktion (11) als Funktion der Lage des aktuellen Betriebspunktes (D) relativ zum Startbetriebspunkt (C) gesteuert und/oder geregelt wird.

10. Verfahren nach einem der Ansprüche 1 bis 5, 9, **dadurch gekennzeichnet , daß** der Startbetriebspunkt (C) der Übergangsfunktion (11) während des Übergangs ständig neu berechnet wird.

11. Verfahren nach einem der Ansprüche 1 bis 10, **dadurch gekennzeichnet, daß** der Motordrehzahlgradient (n_mot_grad) beim Übergang von einem ersten Motordrehzahlverlauf (9) zu einem zweiten Motordrehzahlverlauf (10) als Funktion des Verhältnisses der Differenz (delta_n_mot_aktuell) von aktueller Motordrehzahl (n_mot_aktuell) und fahrzeuggeschwindigkeits-korrespondierender Drehzahl des ersten Motordrehzahlverlaufs (9) zur Differenzdrehzahl zwischen der fahrzeuggeschwindigkeits-korrespondierenden Drehzahl (n_mot_9) auf dem ersten Drehzahlverlauf (9) und der fahrzeuggeschwindigkeits-korrespondierenden Drehzahl (n_mot_10) auf dem Zieldrehzahlverlauf (10) gesteuert und/oder geregelt wird oder daß der Drehzahlgradient beim Übergang zwischen verschiedenen Variator-Eingangsdrehzahlverläufen als Funktion des Verhältnisses der Differenz von aktueller Variator-Eingangsdrehzahl und fahrzeuggeschwindigkeits-korrespondierender Drehzahl des Startdrehzahlverlaufs zur Differenzdrehzahl zwischen der fahrzeuggeschwindigkeits-korrespondierenden Drehzahl des ersten Variator-Eingangsdrehzahlverlaufs und der fahrzeuggeschwindigkeits-korrespondierenden Variator-Eingangsdrehzahl des Zieldrehzahlverlaufs gesteuert und/oder geregelt wird
oder daß der Verstellgradient beim Übergang zwischen verschiedenen Übersetzungsverläufen als Funktion des Verhältnisses der Differenz von aktueller Übersetzung und fahrzeuggeschwindigkeits-korrespondierender Übersetzung des Startübersetzungsverlaufs zur fahrzeuggeschwindigkeits-korrespondierenden Übersetzungsdifferenz zwischen Startund Zielübersetzungsverlauf gesteuert und/oder geregelt wird.

12. Verfahren nach einem der Ansprüche 5 bis 11, **dadurch gekennzeichnet, daß** die Übergangsfunktion nach der Zeit normiert ist.

13. Verfahren nach einem der Ansprüche 5 bis 12, **dadurch gekennzeichnet, daß** die Übergangsfunktion derart ausgebildet ist, daß der Drehzahlgradient und/oder der Übersetzungsgradient beim Wechsel der Drehzahlverläufe oder der Übersetzungsverläufe auf einen vorgebbaren Wert begrenzt ist.

14. Verfahren nach einem der Ansprüche 5 bis 13, **dadurch gekennzeichnet, daß** eine laufende Übergangsfunktion durch einen weiteren Schaltbefehl abgebrochen werden kann und unverzüglich die Übergangsfunktion für den Wechsel in den neuen Drehzahlverlauf oder Übersetzungsverlauf gestartet wird.

15. Verfahren nach einem der Ansprüche 5 bis 14, **dadurch gekennzeichnet, daß** die Übergangsfunktion derart ausgebildet ist, daß Motordrehzahlverläufe oder Variator-Eingangsdrehzahlverläufe oder Übersetzungsverläufe innerhalb der Grenzen des Fahrbereichs durch eine manuelle Vorgabe übersprungen werden können.

16. Verfahren nach einem Ansprüche 5 bis 14, **dadurch gekennzeichnet, daß** das Überführungsverhalten ganz oder teilweise durch ein Fuzzy-Regelwerk berechnet wird.

17. Verfahren nach den Ansprüchen 1 bis 4, **dadurch gekennzeichnet, daß** beim Wechsel der automatischen Betriebsart in die manuelle Betriebsart die Lage des aktuellen Betriebspunktes zunächst relativ zu den nächstliegenden manuell anwählbaren Motordrehzahlverläufen oder Variator-Eingangsdrehzahlverläufen oder Übersetzungsverläufen nachgeführt wird und daß der aktuelle Betriebspunkt mit dem nächsten manuellen Schaltbefehl in den nächstliegenden Drehzahl- oder Übersetzungsverlauf überführt wird.

18. Verfahren nach einem der Ansprüche 1 bis 4, 17, **dadurch gekennzeichnet, daß** beim Wechsel der automatischen in die manuelle Betriebsart der aktuelle Betriebspunkt zunächst nur fahrzeuggeschwindigkeitsmäßig nachgeführt wird und daß der Betriebspunkt ab einem Erreichen des nächstliegenden Motordrehzahlverlaufs oder Variator-Eingangsdrehzahlverlaufs oder Übersetzungsverlaufs auf diesem Verlauf bis zum nächsten manuellen Schaltbefehl weitergeführt wird.

19. Verfahren nach einem der Ansprüche 1 bis 4, 17, **dadurch gekennzeichnet, daß** beim Wechsel der automatischen in die manuelle Betriebsart der aktuelle Betriebspunkt sofort auf den nächstliegenden oberen Motordrehzahlverlauf oder Variator-Eingangsdrehzahlverlauf oder Übersetzungsverlauf überführt wird.

20. Verfahren nach einem der Ansprüche 1 bis 4, 17, **dadurch gekennzeichnet, daß** beim Wechsel der automatischen in die manuelle Betriebsart der aktuelle Betriebspunkt sofort auf den nächstunteren Motordrehzahlverlauf oder Variator-Eingangsdrehzahlverlauf oder Übersetzungsverlauf überführt wird.

## Claims

1. Method for manually stipulating the transmission ratio of a continuously variable transmission (CVT) for a motor vehicle, comprising a control device, a shifting or selecting device, a starting element and a variator for adjusting the transmission ratio, in which, in a first automatic operational mode, the control device automatically selects and sets the transmission ratio as a function of input signals derived from a driver-vehicle system and, in a second manual operational mode, the driver can directly intervene in the selection of the transmission ratio via the shifting or selecting device, and in which preset, continuous and vehicle speed-dependent engine rotational speed progressions (3, 4, 5, 6, 7, 8) or preset, continuous and vehicle speed-dependent transmission ratio progressions or preset, continuous and vehicle speed-dependent variator input rotational speed progressions can be manually selected in the second operational mode, **characterised in that** the engine rotational speed progressions or the transmission ratio progressions or the variator input rotational speed progressions are displayed as curve traces between a lower limit (LOW) of the transmission adjustment range and an upper limit (OD) of the transmission adjustment range such that vehicle standstill and the highest possible speed of the vehicle can be attained in each progression.

2. Method as per claim 1, in which the transmission starting device is configured as a torque converter, **characterised in that** the engine rotational speed range which can be used for manual intervention is extended by hydraulic converter identification.

3. Method as per claim 1 or 2, in which the starting device is configured as a clutch, **characterised in that** the engine rotational speed range which can be used for manual intervention is extended by a clutch slip characteristic curve.

4. Method as per one of the claims 1 to 3, **characterised in that** the second manual operational mode is instantly cancelled and the first automatic operational mode is activated in the presence of higher-level input signals and **in that** the second manual operational mode is instantly reactivated once the higher-level input signals are no longer present.

5. Method as per one of the claims 1 to 4, **characterised in that** the transition between different engine rotational speed progressions or variator input rotational speed progressions or transmission ratio progressions is controlled in an open-loop and/or closed-loop system by a transition function (11) which can take any mathematical curve form

6. Method as per one of the claims 1 to 5, in particular as per claim 5, **characterised in that**, in the event of transition between different engine rotational speed progressions (9, 10) or variator input rotational speed progressions or transmission ratio progressions, the engine rotational speed gradient (n_mot_grad) or the variator input rotational speed gradient or the transmission ratio gradient is controlled in an open-loop and/or closed-loop system by a transition function (11) as a function of the position of the current operating point (D) relative to the target operating point (E).

7. Method as per one of the claims 1 to 6, especially as per claims 5 and 6, **characterised in that** the target operating point (E) of the transition function (11) is continuously recalculated during the transition.

8. Method as per one of the claims 1 to 7, **characterised in that**, during the transition from a first engine rotational speed progression (9) to a second engine rotational speed progression (10), the engine rotational speed gradient (n_mot_grad) is controlled in an open-loop and/or closed-loop system as a function of the relationship between, on the one hand, the difference (delta_n_mot_aktuell) between current engine rotational speed . (n_mot_aktuell) and the rotational speed which corresponds to the vehicle speed on the second engine rotational speed progression (10) and, on the other hand, the differential speed between the rotational speed (n_mot_9) which corresponds to the vehicle speed on the first rotational speed progression (9) and the rotational speed (n_mot_10) which corresponds to the vehicle speed on the target rotational speed progression (10)
or **in that**, during the transition between different variator input rotational speed progressions, the rotational speed gradient is controlled in an open-loop and/or closed-loop system as a function of the relationship between, on the one hand, the difference between current variator input rotational speed and rotational speed which corresponds to the vehicle speed on the target rotational speed progression and, on the other hand, the differential speed between the rotational speed which corresponds to the vehicle speed on the first variator input rotational speed progression and the variator input rotational speed which corresponds to the vehicle speed on the target rotational speed progression
or **in that**, during the transition between different transmission ratio progressions, the adjustment gradient is controlled in an open-loop and/or closed-loop system as a function of the relationship between, on the one hand, the difference between current transmission ratio and transmission ratio which corresponds to the vehicle speed on the target transmission ratio progression and, on the other hand, the transmission ratio difference which corresponds to the vehicle speed between start and target transmission ratio progression.

9. Method as per one of the claims 1 to 5, **characterised in that**, during the transition between different engine rotational speed progressions (9, 10) or variator input rotational speed progressions or transmission ratio progressions, the engine rotational speed gradient (n_mot_grad) or the variator input rotational speed gradient or the transmission ratio gradient is controlled by a transition function (11) in an open-loop and/or closed-loop system as a function of the position of the current operating point (D) relative to the starting operating point (C).

10. Method as per one of the claims 1 to 5, 9, **characterised in that**, during the transition, the starting operating point (C) of the transition function (11) is continuously recalculated.

11. Method as per one of the claims 1 to 10, **characterised in that**, during transition from a first engine rotational speed progression (9) to a second engine rotational speed progression (10), the engine rotational speed gradient (n_mot_grad) is controlled in an open-loop and/or closed-loop system as a function of the relationship between, on the one hand, the difference (delta_n_mot_aktuell) between current engine rotational speed (n_mot_aktuell) and rotational speed which corresponds to the vehicle speed on the first engine rotational speed progression (9) and, on the other hand, the differential speed between the rotational speed (n_mot_9) which corresponds to the vehicle speed on the first rotational speed progression (9) and the rotational speed (n_mot_10) which corresponds to the vehicle speed on the target rotational speed progression (10)
or **in that**, during the transition between different variator input rotational speed progressions, the rotational speed gradient is controlled in an open-loop and/or closed-loop system as a function of the relationship between, on the one hand, the difference between current variator input rotational speed and rotational speed which corresponds to the vehicle speed on the starting rotational speed progression and, on the other hand, the differential speed between the rotational speed which corresponds to the vehicle speed on the first variator input rotational speed progression and the variator input rotational speed which corresponds to the vehicle speed on the target rotational speed progression
or **in that**, during the transition between different transmission ratio progressions, the adjustment gradient is controlled in an open-loop and/or closed-loop system as a function of the relationship between, on the one hand, the difference between current transmission ratio and transmission ratio which corresponds to the vehicle speed on the starting transmission ratio progression and, on the other hand, the transmission ratio differential which corresponds to the vehicle speed between starting and target transmission ratio progression.

12. Method as per one of the claims 5 to 11, **characterised in that** the transition function is standardised after and according to time.

13. Method as per one of the claims 5 to 12, **characterised in that** the transition function is configured such that the rotational speed gradient and/or the transmission ratio gradient is limited to a specified value in the event of a change between the rotational speed progressions or the transmission ratio progressions.

14. Method as per one of the claims 5 to 13, **characterised in that** an ongoing transition function can be aborted by means of a further shift command and the transition function for the change to the new rotational speed progression or transmission ratio progression is started immediately.

15. Method as per one of the claims 5 to 14, **characterised in that** the transition function is configured such that engine rotational speed progressions or variator input rotational speed progressions or transmission ratio progressions can be overridden by a manual stipulation within the limits of the drive range.

16. Method as per one of the claims 5 to 14, **characterised in that** the transition characteristics are partially or wholly calculated by a fuzzy control system.

17. Method as per the claims 1 to 4, **characterised in that**, during the change from the automatic operational mode to the manual operational mode, the position of the current operating point is initially corrected relative to the next manually selectable engine rotational speed progressions or variator input rotational speed progressions or transmission ratio progressions
and **in that** the current operating point is transferred to the next rotational speed or transmission ratio progression with the next manual shift command.

18. Method as per one of the claims 1 to 4, 17, **characterised in that**, during the change from the automatic operational mode to the manual operational mode, the current operating point is initially only corrected with respect to the vehicle speed
and **in that**, after the next engine rotational speed progression or variator input rotational speed progression or transmission ratio progression is reached, the operating point remains on this progression until the next manual shift command.

19. Method as per one of the claims 1 to 4, 17, **characterised in that**, during the change from the automatic operational mode to the manual operational mode, the current operating point is immediately transferred to the next highest engine rotational speed progression or variator input rotational speed progression or transmission ratio progression.

20. Method as per one of the claims 1 to 4, 17, **characterised in that**, during the change from the automatic operational mode to the manual operational mode, the current operating point is immediately transferred to the next lowest engine rotational speed progression or variator input rotational speed progression or transmission ratio progression.

## Revendications

1. Méthode de pré-réglage manuel du rapport de démultiplication d'une boîte de vitesses à variation continue d'un véhicule automobile entraîné en particulier par un moteur à combustion, dotée d'un dispositif de commande, d'un dispositif de sélection, d'un dispositif de démarrage et d'un variateur pour le réglage du rapport de démultiplication, sachant que le dispositif de commande, lorsqu'il se trouve dans un premier mode de fonctionnement automatique, choisit et règle automatiquement le rapport de démultiplication de la boîte de vitesses en fonction des signaux d'entrée déduits à partir d'un système conducteur-véhicule, et sachant que lorsque le dispositif de commande se trouve dans un deuxième mode de fonctionnement manuel, le conducteur aura la possibilité d'intervenir directement, au moyen du dispositif de sélection, dans le choix du rapport de démultiplication, sachant que dans le deuxième mode de fonctionnement il sera possible de sélectionner manuellement des courbes caractéristiques du régime moteur (3, 4, 5, 6, 7, 8) pré-réglées, progressives et dépendantes de la vitesse du véhicule ou des courbes caractéristiques des rapports de démultiplication pré-réglées, progressives et dépendantes de la vitesse du véhicule ou des courbes caractéristiques du régime d'entrée du variateur pré-réglées, progressives et dépendantes de la vitesse du véhicule, **caractérisée en ce que** les courbes caractéristiques du régime moteur ou les courbes caractéristiques des rapports de démultiplication ou les courbes caractéristiques du régime d'entrée du variateur sont conçues comme tracés courbes - se situant entre un seuil inférieur (LOW) de la plage de réglage de la boîte de vitesses et un seuil supérieur (OD) de la plage de réglage de la boîte de vitesses - et de façon à ce que dans chaque courbe caractéristique peut être atteint soit l'arrêt du véhicule soit la vitesse maximale du véhicule.

2. Méthode selon la revendication 1, sachant que le dispositif de démarrage de la boîte de vitesses est conçu comme convertisseur de couple, **caractérisée en ce que** la plage de régime moteur exploitable pour une intervention manuelle est étendue par la loi hydraulique du convertisseur.

3. Méthode selon une des revendications 1 ou 2, sachant que le dispositif de démarrage est conçu comme embrayage, **caractérisée en ce que** la plage de régime moteur exploitable pour une intervention manuelle est étendue par une loi de patinage de l'embrayage.

4. Méthode selon une des revendications 1 à 3, **caractérisée en ce que** le deuxième mode de fonctionnement manuel est quitté immédiatement en cas de présence de signaux d'entrée prioritaires pour passer au premier mode de fonctionnement automatique, et **en ce que**, au moment de l'extinction des signaux d'entrée prioritaires, l'on retourne immédiatement au deuxième mode de fonctionnement manuel.

5. Méthode selon une des revendications 1 à 4, **caractérisée en ce que** la transition entre les différentes courbes caractéristiques de régime moteur ou de régime d'entrée du variateur ou des rapports de démultiplication est pilotée et/ou réglée par une fonction de transition (11), qui est conçue comme courbe mathématique aléatoire.

6. Méthode selon une des revendications 1 à 5, **caractérisée en ce que** lors de la transition entre différentes courbes caractéristiques de régime moteur (9, 10) ou de régime d'entrée du variateur ou des rapports de démultiplication le gradient de régime moteur (n_mot_grad) ou le gradient de régime d'entrée du variateur ou le gradient des rapports de démultiplication est pilotée et/ou réglée par une fonction de transition (11) en tant que fonction de la position du point de fonctionnement actuel (D) relative au point de fonctionnement cible (E).

7. Méthode selon une des revendications 1 à 6, en particulier selon les revendications 5 et 6, **caractérisée en ce que** le point de fonctionnement cible (E) de la fonction de transition (11) est recalculé en permanence pendant la phase de transition.

8. Méthode selon une des revendications 1 à 7, **caractérisée en ce que** le gradient de régime moteur (n_mot_grad) - lors de la phase de transition d'une première courbe caractéristique de régime moteur à une deuxième courbe caractéristique de régime moteur (10) - est piloté et/ou réglé en tant que fonction du rapport entre la différence (delta_n_mot_aktuell) du régime moteur actuel (n_mot_aktuell) et du régime correspondant à la vitesse du véhicule de la deuxième courbe caractéristique de régime moteur (10) et le régime différentiel entre le régime correspondant à la vitesse du véhicule (n_mot_9) au niveau de la première courbe caractéristique (9) et le régime correspondant à la vitesse du véhicule (n_mot_10) au niveau de la courbe caractéristique du régime cible (10); ou **en ce que** le gradient de régime - lors de la phase de transition entre différentes courbes caractéristiques de régime d'entrée du variateur - est piloté et/ou réglé en tant que fonction du rapport entre la différence du régime d'entrée actuel du variateur et le régime correspondant à la vitesse du véhicule de la courbe caractéristique du régime cible et le régime différentiel entre le régime correspondant à la vitesse du véhicule de la première courbe caractéristique de régime d'entrée du variateur et le régime correspondant à la vitesse du véhicule du régime d'entrée du variateur de la courbe caractéristique de régime cible; ou **en ce que** le gradient de réglage - lors de la phase de transition entre différentes courbes caractéristiques des rapports de démultiplication - est piloté et/ou réglé en tant que fonction du rapport de la différence entre le rapport de démultiplication actuel et le rapport de démultiplication correspondant à la vitesse du véhicule de la courbe caractéristique du rapport de démultiplication cible et la différence de rapport de démultiplication correspondant à la vitesse du véhicule entre la courbe caractéristique de départ et la courbe caractéristique cible du rapport de démultiplication.

9. Méthode selon une des revendications 1 à 5, **caractérisée en ce que** lors de la transition entre différentes courbes caractéristiques de régime moteur (9, 10) ou courbes caractéristiques de régime d'entrée du variateur ou courbes caractéristiques des rapports de démultiplication, le gradient de régime moteur (n_mot_grad) ou le gradient de régime d'entrée du variateur ou le gradient du rapport de démultiplication est piloté et/ou réglé par une fonction de transition (11) en tant que fonction de la position du point de fonctionnement actuel (D) relative au point de fonctionnement de départ (C).

10. Méthode selon une des revendications 1 à 5 et 9, **caractérisée en ce que** le point de fonctionnement de départ (C) de la fonction de transition (11) est recalculé en permanence lors de la phase de transition.

11. Méthode selon une des revendications 1 à 10, **caractérisée en ce que** le gradient de régime moteur (n_mot_grad) - lors de la phase de transition d'une première courbe caractéristique de régime moteur à une deuxième courbe caractéristique de régime moteur (10) - est piloté et/ou réglé en tant que fonction du rapport entre la différence (delta_n_mot_aktuell) du régime moteur actuel (n_mot_aktuell) et du régime correspondant à la vitesse du véhicule de la première courbe caractéristique de régime moteur (9) et le régime différentiel entre le régime correspondant à la vitesse du véhicule (n_mot_9) au niveau de la première courbe caractéristique (9) et le régime correspondant à la vitesse du véhicule (n_mot_10) au niveau de la courbe caractéristique du régime cible (10); ou **en ce que** le gradient de régime - lors de la phase de transition entre différentes courbes caractéristiques de régime d'entrée du variateur - est piloté et/ou réglé en tant que fonction du rapport entre la différence du régime d'entrée actuel du variateur et le régime correspondant à la vitesse du véhicule de la courbe caractéristique du régime de départ et le régime différentiel entre le régime correspondant à la vitesse du véhicule de la première courbe caractéristique de régime d'entrée du variateur et le régime correspondant à la vitesse du véhicule du régime d'entrée du variateur de la courbe caractéristique de régime cible; ou **en ce que** le gradient de réglage - lors de la phase de transition entre différentes courbes caractéristiques des rapports de démultiplication - est piloté et/ou réglé en tant que fonction du rapport de la différence entre le rapport de démultiplication actuel et le rapport de démultiplication correspondant à la vitesse du véhicule de la courbe caractéristique du rapport de démultiplication de départ et la différence de rapport de démultiplication correspondant à la vitesse du véhicule entre la courbe caractéristique de départ et la courbe caractéristique cible du rapport de démultiplication.

12. Méthode selon une des revendications 5 à 11, **caractérisée en ce que** la fonction de transition est normalisée en fonction du temps.

13. Méthode selon une des revendications 5 à 12, **caractérisée en ce que** la fonction de transition est conçue de façon à ce que le gradient de régime et/ou le gradient du rapport de démultiplication est limité - lors de la phase de transition entre les différentes courbes caractéristiques de régime ou les différentes courbes caractéristiques du rapport de démultiplication - à une valeur de consigne.

14. Méthode selon une des revendications 5 à 13, **caractérisée en ce que** une fonction de transition en cours pourra être interrompue au moyen d'une autre commande de passage de vitesse et **en ce que** la fonction de transition, déclenchant le passage à une autre courbe caractéristique de régime ou une autre courbe caractéristique de rapport de démultiplication, est par conséquent immédiatement démarrée.

15. Méthode selon une des revendications 5 à 14, **caractérisée en ce que** la fonction de transition est conçue de façon à ce que des courbes caractéristiques de régime moteur ou des courbes caractéristiques de régime d'entrée du variateur ou des courbes caractéristiques de rapport de démultiplication pourront être sautées - entre les limites de la plage de marche - par une valeur de consigne introduite manuellement

16. Méthode selon une des revendications 5 à 14, **caractérisée en ce que** le comportement lors de la phase de transition est calculé en partie ou entièrement par un mécanisme, dont le principe de fonctionnement est basé sur la logique floue.

17. Méthode selon une des revendications 1 à 4, **caractérisée en ce que** lors du passage du mode de fonctionnement automatique au mode de fonctionnement manuel, la position du point de fonctionnement actuel est adapté d'abord relativement aux courbes caractéristiques de régime moteur ou aux courbes caractéristiques de régime d'entrée du variateur ou aux courbes caractéristiques de rapport de démultiplication les plus rapprochées et qui peuvent être sélectionnées manuellement, et **en ce que** le point de fonctionnement actuel est transféré par la successive commande de passage de vitesse déclenchée manuellement à la courbe caractéristique de régime ou à la courbe caractéristique de rapport de démultiplication les plus rapprochées.

18. Méthode selon une des revendications 1 à 4 et 17, **caractérisée en ce que** - lors du passage du mode de fonctionnement automatique au mode de fonctionnement manuel - le point de fonctionnement actuel est, d'abord, adapté uniquement en fonction de la vitesse du véhicule, et **en ce que** le point de fonctionnement - à partir du point où la courbe caractéristique de régime moteur ou la courbe caractéristique de régime d'entrée du variateur ou la courbe caractéristique de rapport de démultiplication les plus rapprochées sont atteintes - est poursuivi sur cette courbe caractéristique jusqu'à la commande de passage de vitesse successive déclenchée manuellement.

19. Méthode selon une des revendications 1 à 4 et 17, **caractérisée en ce que** - lors du passage du mode de fonctionnement automatique au mode de fonctionnement manuel - le point de fonctionnement actuel est transféré immédiatement à la courbe caractéristique de régime moteur supérieure ou à la courbe caractéristique de régime d'entrée du variateur ou à la courbe caractéristique de rapport de démultiplication les plus rapprochées.

20. Méthode selon une des revendications 1 à 4 et 17, **caractérisée en ce que** - lors du passage du mode de fonctionnement automatique au mode de fonctionnement manuel - le point de fonctionnement actuel est transféré immédiatement à la courbe caractéristique de régime moteur ou à la courbe caractéristique de régime d'entrée du variateur ou à la courbe caractéristique de rapport de démultiplication immédiatement inférieures.
